(19) Europäisches Patentamt
European Patent Office
Office européen des brevets

(11) EP 1 897 914 A1

(12) **EUROPEAN PATENT APPLICATION**
published in accordance with Art. 153(4) EPC

(43) Date of publication:
**12.03.2008 Bulletin 2008/11**

(21) Application number: **06756995.4**

(22) Date of filing: **05.06.2006**

(51) Int Cl.:
***C08L 101/00*** *(2006.01)* ***C08K 3/34*** *(2006.01)*
***C08K 5/3435*** *(2006.01)* ***C08K 9/04*** *(2006.01)*

(86) International application number:
**PCT/JP2006/311249**

(87) International publication number:
**WO 2007/000876 (04.01.2007 Gazette 2007/01)**

(84) Designated Contracting States:
**DE FR GB**

(30) Priority: **29.06.2005 JP 2005189728**

(71) Applicant: **Adeka Corporation**
**Tokyo 116-0012 (JP)**

(72) Inventors:
- **YUKINO, Toshinori**
  **c/o ADEKA CORPORATION**
  **Saitama-shi,**
  **Saitama 3360022 (JP)**
- **FUKUSHIMA, Mitsuru**
  **c/o ADEKA CORPORATION**
  **Saitama-shi,**
  **Saitama 3360022 (JP)**
- **TANJI, Naoko**
  **c/o ADEKA CORPORATION**
  **Saitama-shi,**
  **Saitama 3360022 (JP)**
- **YOKOTA, Akiko**
  **c/o ADEKA CORPORATION**
  **Saitama-shi,**
  **Saitama 3360022 (JP)**

(74) Representative: **Jones, Helen M.M.**
**Gill Jennings & Every LLP**
**Broadgate House**
**7 Eldon Street**
**London EC2M 7LH (GB)**

(54) **RESIN ADDITIVE COMPOSITION AND RESIN COMPOSITION**

(57) A resin additive composition that includes a resin additive having a melting point of 100°C or less and thereby is improved in handleability and is highly held in a resin is provided. The resin additive composition is prepared by impregnating a powdery inorganic material (B) having an oil absorption of 150 mL/100 g or more and preferably 200 mL/100 g or more with a resin additive (A) having a melting point of 100°C or less in advance. Examples of the resin additive (A) include an antioxidant, an ultraviolet absorber, a light stabilizer, and mixtures thereof. Examples of the powdery inorganic material (B) include silica, aluminium silicate, hydrotalcite, calcium silicate, magnesium aluminometasilicate, and mixtures thereof.

EP 1 897 914 A1

## Description

Technical Field

The present invention relates to a resin additive composition prepared by impregnating a powdery inorganic material having an oil absorption of 150 mL/100 g or more with a resin additive having a melting point of 100˚C or less in advance and relates to a synthetic resin composition thereof.

Background Art

Resin additives such as phenol-based antioxidants, ultraviolet absorbers, and hindered amine compounds are known to prevent organic materials such as synthetic resins from deterioration due to light or heat.

In general, compounds used as the resin additive preferably have a high melting point and are low in plasticization of a resin and low in evaporation from a resin, such as tetrakis(3-(3,5-di-tert-butyl-4-hydroxyphenyl)propionyloxymethyl) methane and tris(2,4-di-tert-butylphenyl)phosphite. However, an additive with a higher molecular weight cannot migrate in a resin. Consequently, the stabilizing effect tends to be reduced.

On the other hand, compounds having a low melting point, such as stearyl (3,5-di-tert-butyl-4-hydroxyphenyl) propionate and bis(2,2,6,6-tetramethylpiperidyl)sebacate, have a relatively low molecular weight and exhibit excellent initial stabilizing effect. However, such compounds readily evaporate from a resin and are hence poor in long-term stabilizing effect. In addition, the compounds being liquid, viscous, or powdery may cake into a large lump during the storage and are thus poor in handleability. In order to improve the handleability, the production of a master batch is necessary.

For example, conventional hindered amine compounds are low in compatibility with polyolefin resins and are readily evaporate from the resins when used for the resins. Consequently, there is a problem that the stabilizing effect does not continue. Furthermore, in application being brought into contact with acid rain or agricultural chemicals, there is a problem that the hindered amine compounds are extracted with the acid or acid contents generated by decomposition.

Though hindered amine compounds obtained by a reaction of 2,2,6,6-tetramethylpiperidinol and fatty acid exhibit excellent weatherability-imparting effect, a low-molecular-weight hindered amine compound tends to become liquid. In a master batch produced for improving the handleability, additives exude to the surface of the master-batched resin composition to increase viscosity. Therefore, the master batch is necessary to be in a low concentration.

Patent Document 1 proposes master-batch production as a method for improving the handleability of an additive, and Patent Document 2 proposes microcapsule production. Furthermore, in the method proposed in Patent Document 3, powder characteristics are improved by enhancing the crystallization of a flame retardant having a low melting point. All the above methods are techniques for improving the handleability of additives that are liquid and have a low melting point.

However, in the master batch production, it is difficult to manufacture a high concentration product, as described above. The microcapsule production is high in cost. The enhancement of crystallization can improve handleability compared to that of an amorphous material, but cannot be applied to a liquid material. Furthermore, if a crystal material has a low melting point, the effect for preventing caking is low. Thus, the effect of improving handleability is limited.

Patent Document 1: Japanese Unexamined Patent Application Publication No. 2003-41008 (Claims)
Patent Document 2: PCT Japanese Translation Patent Publication No. 10-512320 (Claims)
Patent Document 3: Japanese Unexamined Patent Application Publication No. 9-87290 (Claims)

Disclosure of Invention

Problems to Be Solved by the Invention

A resin additive improved in handleability and highly held in a resin by containing a resin additive having a melting point of 100˚C or less is provided.

Means for Solving the Problems

Under the above circumstances, the present inventors have conducted intensive studies and, as a result, have found the fact that a resin additive composition prepared by impregnating a powdery inorganic material having an oil absorption of 150 mL/100 g or more with a resin additive having a melting point of 100˚C or less in advance is excellent in stabilizing effect and handleability, and have arrived at the present invention.

That is, a first aspect of the present invention provides a resin additive composition including a powdery inorganic

material (B) having an oil absorption of 150 mL/100 g or more impregnated with a resin additive (A) having a melting point of 100˚C or less in advance.

A second aspect of the present invention provides a resin additive composition according to the first aspect of the present invention, wherein the resin additive (A) has a melting point of 60˚C or less.

A third aspect of the present invention provides a resin additive composition according to the first or second aspect of the present invention, wherein the resin additive (A) is an ultraviolet absorber, a hindered amine compound, or a mixture thereof.

A fourth aspect of the present invention provides a resin additive composition according to any one of the first to third aspects of the present invention, wherein the resin additive (A) is a compound represented by General Formula (I) :

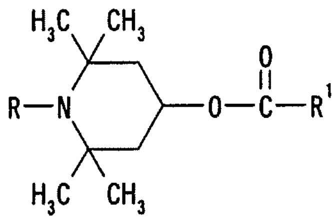

(I)

(wherein R represents a hydrogen atom, a hydroxyl group, an alkyl group, a hydroxyalkyl group, an alkoxy group, a hydroxyalkoxy group,which have 1 to 30 carbon atoms, or an oxyradical; and $R^1$ represents an alkyl group having 1 to 30 carbon atoms or an alkenyl group having 2 to 30 carbon atoms).

A fifth aspect of the present invention provides a resin additive composition according to the fourth aspect of the present invention, wherein $R^1$ represents a mixture of alkyl groups having 8 to 22 carbon atoms.

A sixth aspect of the present invention provides a resin additive composition according to any one of the first to fifth aspects of the present invention, wherein the inorganic material (B) is magnesium aluminometasilicate.

A seventh aspect of the present invention provides a resin composition containing a resin additive composition according to any one of the first to sixth aspects of the present invention.

Advantages of the Invention

According to the present invention, a resin additive composition being excellent in handleability and initial stabilizing effect and being highly held in a resin is provided.

Furthermore, a resin composition that is excellent in initial stability and additive-holding ability is provided by blending the resin additive composition to a resin.

Best Mode for Carrying Out the Invention

The present invention will now be described in detail.

The resin additive (A) having a melting point of 100˚C or less is, for example, an antioxidant, an ultraviolet absorber, a light stabilizer, or a mixture thereof.

The antioxidant having a melting point of 100˚C or less is, for example, a phenol-based antioxidant, a phosphorus-based antioxidant, or a sulfur-based antioxidant.

The ultraviolet absorber having a melting point of 100˚C or less is, for example, a salicylic acid-based ultraviolet absorber, a benzophenone-based ultraviolet absorber, a benzotriazole-based ultraviolet absorber, or a cyanoacrylate-based ultraviolet absorber.

The light stabilizer having a melting point of 100˚C or less is, for example, a hindered amine compound.

Specifically, examples of the phenol-based antioxidant include stearyl (3,5-di-tert-butyl-4-hydroxyphenyl)propionate, thiobis(3-(3,5-di-tert-butyl-4-hydroxyphenyl)propionyloxy)ethyl, triethylene glycol bis[(3-tert-butyl-4-hydroxy-5-methylphenyl)propionate], 2,4-bisoctylthio-6-(3,5-di-tert-butyl-4-hydroxyanilino)-s-triazine, 2-methyl-4,6-bis(octylthiomethyl)phenol, 2,4-dimethyl-6-(1-methylpentadecyl)phenol, (3,5-di-tert-butyl-4-hydroxyphenyl)propionic acid esters of a mixture of branched alcohols having 7 to 9 carbon atoms, and 2,2-thiobis(4-methyl-6-tert-butylphenol).

Examples of a phosphite-based antioxidant having a melting point of 100˚C or less include triphenyl phosphite, trisnonylphenyl phosphite, distearylpentaerythritol diphosphite, bisnonylphenylpentaerythritol diphosphite, bisphenol-A phosphites of a mixture of alcohols having 12 to 15 carbon atoms, diphenyl-2-ethylhexyl phosphite, diphenylisodecyl phosphite, triisodecyl phosphite, 1,1-butylidenebis(2-methyl-4-hydroxy-5-tert-butylphenyl) phosphites of tridecyl alcohol, and 1,1,3-tris(2-methyl-4-hydroxy-5-tert-butylphenyl)butane phosphites of tridecyl alcohol.

Examples of the thioether-based antioxidant having a melting point of 100˚C or less include dilauryl thiodipropionate, ditridecyl thiodipropionate, distearyl thiodipropionate, pentaerythritol tetrakis(3-dodecylthio propionate), and 4,4-thiobis(2-tert-butyl-5-methylphenol)bis-3-(dodecylthio)propionate.

Examples of the ultraviolet absorber having a melting point of 100˚C or less include hexadecyl-3,5-di-tert-butyl-4-hydroxybenzoate, 2-hydroxy-4-methoxybenzophenone, 2-hydroxy-4-octoxybenzophenone, 2-hydroxy-4-dodecyloxybenzophenone, 2,2'-dihydroxy-4-methoxybenzophenone, polymers of 4-(2-acryloyloxy)ethoxy-2-hydroxybenzophenone, 2-(2'-hydroxy-3',5'-di-tert-pentylphenyl)benzotriazole, 3-(3-(2H-benzotriazol-2-yl)-4-hydroxy-5-tert-butylphenyl) propionic acid esters of a mixture of alcohols having 7 to 9 carbon atoms, 3-(3-(2H-benzotriazol-2-yl)-4-hydroxy-5-tert-butylphenyl)propionic acid esters of polyethylene glycol, 2-(2H-benzotriazol-2-yl)-4-methyl-6-dodecylphenol (a mixture of a compound with a linear dodecyl group and a compound with a branched dodecyl group), 3-(3-(5-chloro-2H-benzotriazol-2-yl)-4-hydroxy-5-tert-butylphenyl)propionic acid esters of octanol, 2-(4-octyloxyphenyl)-4,6-bis(2,4-dimethylphenyl)-1,3,5-triazine, 2-(4-isooctyloxyphenyl)-4,6-bis(2,4-dimethylphenyl)-1,3,5-triazine, 2-(2-hydroxy-4-(3-(2-ethylhexyl-1-oxy)-2-hydroxypropyloxy)phenyl)-4,6-bis(2,4-dimethylphenyl)-1,3,5-triazine, 2'-ethylhexyl-2-cyano-3-phenylcinnamate, and N-(2-ethoxyphenyl)-N'-(4-isododecylphenyl)oxamide.

Examples of the hindered amine compound having a melting point of 100˚C or less include fatty acid esters of 2,2,6,6-tetramethyl-4-piperidinol, bis(2,2,6,6-tetramethyl-4-piperidyl)sebacate, mixtures of bis(1,2,2,6,6-pentamethyl-4-piperidyl)sebacate and methyl-1,2,2,6,6-pentamethyl-4-piperidyl sebacate, butanetetracarboxylic acid tetraesters of an alcohol mixture of 1,2,2,6,6-pentamethylpiperidinol and tridecyl alcohol, butanetetracarboxylic acid tetraesters of an alcohol mixture of 2,2,6,6-tetramethylpiperidinol and tridecyl alcohol, bis(1-octyloxy-2,2,6,6-pentamethyl-4-piperidyl) sebacate, butanedioic acid polyesters of 1-(2-hydroxyethyl)-2,2,6,6-tetramethyl-4-piperidinol, reaction products" of 2,2,6,6-tetramethyl-4-(2-propenyloxy)piperidine and methyl hydrogen siloxane, mixtures of dodecyl-3-(2,2,4,4-tetramethyl-21-oxo-7-oxa-3,20-diazodispiro(5.1.11.2)heneicosan-20-yl)propionate and tetradecyl-3-(2,2,4,4-tetramethyl-21-oxo-7-oxa-3,20-diazodispiro(5.1.11.2)heneicosan-20-yl)propionate, mixtures of dodecyl-N-(2,2,6,6-tetramethylpiperidin-4-yl)-b-alaninate and tetradecyl-N-(2,2,6,6-tetramethylpiperidin-4-yl)-b-alaninate, 3-dodecyl-N-(2,2,6,6-tetramethylpiperidin-4-yl)succinimide, 2-dodecyl-N-(1-acetyl-2,2,6,6-tetramethylpiperidin-4-yl), and bis(1-undecanoxy-2,2,6,6-tetramethylpiperidyl-4-yl)carbonate.

The resin additive (A) may be these compounds being used alone or an additive composition having a melting point of 100˚C or less as a mixture containing any of these compounds. In a compound formed from an aliphatic alcohol or fatty acid, the additive composition may be imparted with a melting point of 100˚C or less by being prepared as a mixture, for example, ester compounds (ester compounds having different groups) or amide compounds (amide compounds having different groups) that are obtained from an alcohol mixture or a fatty acid mixture.

The resin additive (A) has a melting point of 100˚C or less, preferably 80˚C or less, and more preferably 60˚C or less, and may be a liquid at room temperature.

The resin additive (A) is preferably a compound represented by General Formula (I).

In General Formula (I), examples of the alkyl group having 1 to 30 carbon atoms represented by R and $R^1$ include methyl, ethyl, propyl, isopropyl, butyl, isobutyl, sec-butyl, tert-butyl, pentyl, sec-pentyl, tert-pentyl, hexyl, heptyl, octyl, isooctyl, 2-ethylhexyl, tert-octyl, nonyl, isononyl, decyl, undecyl, dodecyl, tridecyl, tetradecyl, pentadecyl, hexadecyl, heptadecyl, and octadecyl.

In General Formula (I), examples of the hydroxyalkyl group having 1 to 30 carbon atoms represented by R include the above alkyl groups substituted with a hydroxyl group, such as hydroxyethyl, 2-hydroxypropyl, and 3-hydroxypropyl.

In General Formula (I), examples of the alkoxy group having 1 to 30 carbon atoms represented by R include groups corresponding to the above alkyl groups, such as methoxy, ethoxy, propoxy, isopropoxy, butoxy, octoxy, and 2-ethylhexyloxy.

In General Formula (I), examples of the hydroxyalkoxy group having 1 to 30 carbon atoms represented by R include groups corresponding to the above alkoxy groups, such as hydroxyethyloxy, 2-hydroxypropyloxy, 3-hydroxypropyloxy, 4-hydroxybutyloxy, 2-hydroxy-2-methylpropyloxy, and 6-hydroxyhexyloxy.

In General Formula (I), examples of the alkenyl group having 2 to 22 carbon atoms represented by $R^1$ include vinyl, propenyl, butenyl, hexenyl, and oleyl. The double bond may be located at the $\alpha$-position, internally, or at the $\omega$-position.

Specific examples of the compound represented by General Formula (I) includes the following compounds of Compound Nos. 1 to 6. However, the present invention is not limited thereto.

Compound No. 1 (melting point: 46˚C)

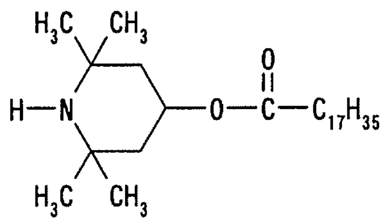

Compound No. 2 (melting point: 37˚C)

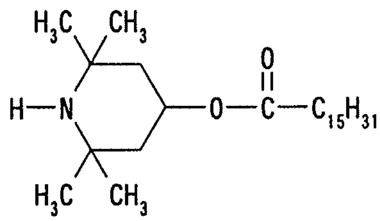

Compound No. 3 (melting point: 48˚C)

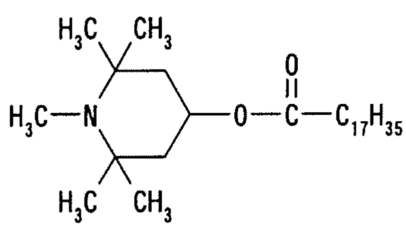

Compound No. 4 (liquid at room temperature)

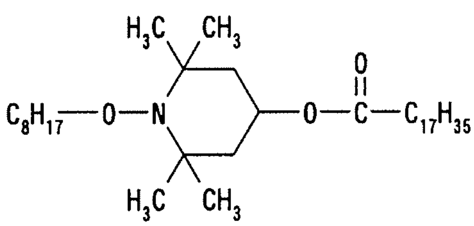

Compound No. 5 (melting point: 63˚C)

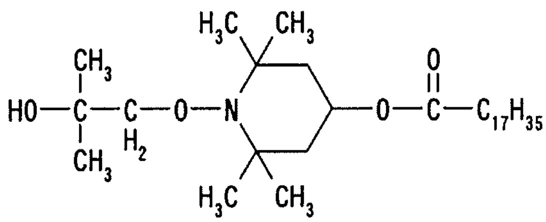

Compound No. 6 (liquid at room temperature)

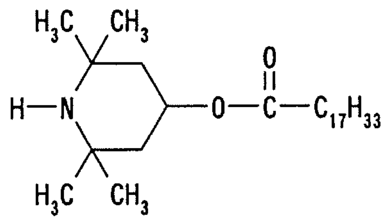

Compound No. 7 (melting point: 56°C)

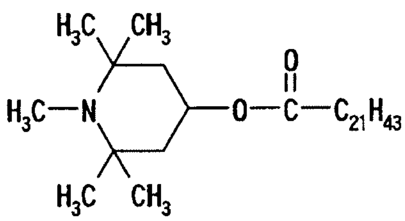

Among the above compounds represented by General Formula (I), compounds other than Compound No. 5 have a melting point of 60°C or less and are hence particularly preferable. These compounds represented by General Formula (I) may be synthesized by any method without any limitation and can be synthesized by a method that is common in organic synthesis, such as direct esterification between an acid and an alcohol, a reaction between an acid halide and an alcohol, and esterification by an ester exchange reaction. Purification by distillation, recrystallization, reprecipitation, or a method using a filtering agent or an absorbent may be optionally performed.

The inorganic material (B) according to the present invention has an oil absorption of 150 mL/100 g or more and preferably 200 mL/100 g or more.

In the present invention, the oil absorption is measured in accordance with JIS K5101-21.

Examples of the powdery inorganic material having an oil absorption of 150 mL/100 g or more include magnesium aluminometasilicate (for example, Neusilin US2: an oil absorption of 340 mL/100 g, Neusilin USL2: an oil absorption of 300 mL/100 g, products of Fuji Chemical Industry Co., Ltd.), special calcium silicate (for example, Florite R: an oil absorption of 400 to 500 mL/100 g, Florite RT: an oil absorption of 400 to 500 mL/100 g, products of Tokuyama Corp.), precipitated silica (for example, Mizukasil P-526: an oil absorption of 235 mL/100 g, product of Mizusawa Industrial Chemicals, Ltd.), gel-type silica (for example, Mizukasil P-705: an oil absorption of 280 mL/100 g, product of Mizusawa Industrial Chemicals, Ltd.), adsorbent silica (for example, Mizukasorb C-1: an oil absorption of 260 mL/100 g, product of Mizusawa Industrial Chemicals, Ltd.), aluminium silicate (for example, Kyoward 700: an oil absorption of 175 mL/100 g, product of Kyowa Chemical Industry Co., Ltd.), and hydrotalcite (for example, Kyoward 2100: an oil absorption of 300 mL/100 g, product of Kyowa Chemical Industry Co., Ltd.).

The average particle diameter of the inorganic material (B) according to the present invention varies depending on the resin to be blended and the type of a molded product, and is 0.1 to 100 μm, preferably 0.3 to 50 μm, and more preferably 0.5 to 30 μm.

When the average particle diameter is larger than the above range, the dispersion of the inorganic material (B) in a resin is poor to degrade the mechanical property of the resin. When the average particle size is smaller than the above range, dust tends to be generated and may hence make the working environment worse.

The method for manufacturing the resin additive composition by impregnating the inorganic material (B) with the resin additive (A) in advance is not specifically limited, and examples thereof are as follows:

(1) a method in which a resin additive (A) is converted into a liquid by heating, if necessary, and is mixed with an inorganic material (B) under atmospheric pressure or vacuum to impregnate the inorganic material (B) with the resin additive (A);
(2) a method in which a solid resin additive (A) is mixed with an inorganic material (B) under atmospheric pressure or vacuum to impregnate the inorganic material (B) with the resin additive (A);
(3) a method in which a resin additive (A) is dissolved in a solvent, the resulting solution is mixed with an inorganic material (B) under atmospheric pressure or vacuum for impregnating the inorganic material (B) with the resin additive (A), and the solvent is evaporated;
(4) a method in which a resin additive (A) is supported on the surface of an inorganic material (B), and a pressure is applied thereto so that the resin additive (A) migrates into the inside of the pores and is adsorbed thereon;
(5) a method in which a resin additive (A) is evaporated so as to be adsorbed and impregnated to an inorganic material (B) in gaseous state; and
(6) a method in which a resin additive (A) is synthesized from a raw material in the presence of an inorganic material (B) to impregnate the inorganic material (B) with the resin additive (A) as a product.

The term "impregnation" in the present invention may be that the pores of a solid are impregnated with a liquid or that microparticles are adsorbed or sorbed to the pores of a solid.

It is preferable that the impregnation of the inorganic material (B) with the resin additive (A) be uniform as much as possible.

The inorganic material (B) may be provided with washing, surface treatment, or drying to enhance the impregnation with resin additive (A).

Furthermore, the impregnation may be carried out, for example, under vacuum to remove the air from the pores of the inorganic material (B).

The resin additive composition according to the present invention may be a mixture of different types of resin additive compositions.

Any apparatus may be used for manufacturing the resin additive composition of the present invention without any limitation. For example, various types of mixers, an agitation tank, or a rolling tank can be used. These apparatuses may be provided with a heating/cooling device, a pressure reducing device, a stirrer, a raw material collector, an inert gas supplying device, or the like.

The impregnation may be a batch-type, semibatch-type, or continuous-type.

The mixing ratio of the resin additive (A) to the inorganic material (B) for preparing the resin additive composition according to the present invention varies depending on the oil absorption of the inorganic material (B). The weight percent ratio of the resin additive (A) to the inorganic material (B) is preferably 50% by weight/50% by weight or more and more preferably 70% by weight/30% by weight or more.

When the mixing ratio of the resin additive (A) to the inorganic material (B) is less than the above range, a large amount of an inorganic material is blended with a resin. Consequently, the inorganic material highly affects the mechanical property of the resin.

The impregnation ratio (g/mL) of the resin additive (A) to the inorganic material (B) is calculated by the following expression:

$$\text{Impregnation ratio (g/mL)} = \text{weight \% of the resin additive (A)} / (\text{oil absorption (mL) of the inorganic material (B)} \times \text{weight \% of the inorganic material (B)}).$$

In the expression, the total of the resin additive (A) and the inorganic material (B) is 100% by weight.

The impregnation ratio is preferably 0.3 to 1.5, more preferably 0.5 to 1.0, and particularly preferably 0.6 to 0.9.

When the impregnation ratio is less than the above range, the dispersion rate or amount of a resin additive from an inorganic material to a resin layer may be insufficient. When the ratio is higher than the above range, the resin

additive adhered to the surface of the inorganic material causes bunching of the powder or makes the powder into a paste to deteriorate the handleability.

The resin to be stabilized by the resin additive according to the present invention may be any resin, such as a thermoplastic resin, a thermosetting resin, a crystalline resin, a non-crystalline resin, a biodegradable resin, a non-biodegradable resin, a synthetic resin, a naturally occurring resin, a commodity resin, an engineering resin, and a polymer alloy.

Examples of the synthetic resin include thermoplastic resins, for example, polypropylene, low-density polyethylene, linear low-density polyethylene, high-density polyethylene, polybutene-1, poly-3-methylpentene, poly-4-methylpentene, α-olefin polymers or copolymers such as ethylene-propylene copolymers, multi-unsaturated compounds of these α-olefins and conjugated dienes or unconjugated dienes, copolymers with acrylic acid, methacrylic acid, or vinyl acetate, linear polyesters or acid-modified polyesters such as polyethylene terephthalate, polyethylene terephthalate · isophthalate, polyethylene terephthalate·paraoxybenzoate, and polybutylene terephthalate, biodegradable resins such as aliphatic polyesters, polyamides such as liquid-crystal polyester, polycaprolactam, and polyhexamethylene adipamide, liquid-crystal polyamide, polyimide, polystyrene, copolymers (for example, AS resin, ABS resin, MBS resin, and heat-resistant ABS resin) of styrene and/or α-methylstyrene with another monomer (for example, anhydrous maleic acid, phenylmaleimide, methyl methacrylate, butadiene, and acrylonitorile), halogen-containing resins such as polyvinyl chloride, polyvinylidene chloride, chlorinated polyethylene, chlorinated polypropylene, polyvinylidene fluoride, chlorinated rubber, vinyl chloride-vinyl acetate copolymers, vinyl chloride-ethylene copolymers, vinyl chloride-vinylidene chloride copolymers, vinyl chloride-vinylidene chloride-vinyl acetate ternary copolymers, vinyl chloride-acrylic acid ester copolymers, vinyl chloride-maleic acid ester copolymers, and vinyl chloride-cyclohexylmaleimide copolymers, polymers of (metha)acrylic acid ester such as methyl (metha)acrylate, ethyl (metha)acrylate, and octyl (metha)acrylate, polyether ketone, polyvinyl acetate, polyvinyl formal, polyvinyl butyral, polyvinyl alcohol, linear or branched polycarbonate, petroleum resins, coumarone resins, polyphenylene oxide, polyphenylene sulfide, thermoplastic polyurethane, and cellulose resins; thermosetting resins, for example, epoxy resins, phenol resins, urea resins, melamine resins, unsaturated polyester resins, thermosetting polyurethane; and isoprene rubber, butadiene rubber, butadiene-styrene copolymer rubber, butadiene-acrylonitrile copolymer rubber, acrylonitrile-butadiene-styrene copolymer rubber, copolymer rubber of ethylene and α-olefin such as propylene and butene-1, elastomers such as ternary copolymer rubber of ethylene-α-olefin and a non-conjugated diene such as ethylidenenorbornene or cyclopentadiene, and silicone resins. The synthetic resin may be an alloy or blend of any of these resins and/or an elastomer.

Examples of naturally occurring resin include natural rubber, microorganism-produced aliphatic polyesters such as 3-hydroxybutyrate, microorganism-produced aliphatic polyamides, starch, cellulose, chitin/chitosan, and gluten/gelatin.

The stabilizing effects of the above-mentioned resins vary depending on, for example, stereoregularity, specific gravity, the kind of polymerization catalyst, whether the polymerization catalyst is removed or not and its degree, the degree of crystallization, polymerization conditions such as temperature and pressure, the type of crystal, the size of lamellar crystal measured using X-ray small-angle scattering, the aspect ratio of crystal, solubility in an aromatic or aliphatic solvent, solution viscosity, melt viscosity, average molecular weight, the degree of molecular weight distribution, the number of peaks in the molecular weight distribution, whether a copolymer is block or random if it is a copolymer, and the blending ratio of each monomer. However, all resins are applicable.

The method of blending the resin additive composition according to the present invention with a resin is not specifically limited. Known techniques for blending a stabilizer with a resin can be employed. The resin additive composition may be previously added to a polymerization system when a synthetic resin is polymerized, or may be added during the polymerization, or may be added after the polymerization. Furthermore, the addition after polymerization may be performed by mixing the resin additive composition with a powder or pellet of a synthetic resin to be stabilized using a Henschel mixer and kneading the mixture using an extruder, or may be performed after producing a master batch. The type of a machine used, processing temperature, and cooling conditions after the processing are not specifically limited. It is preferable to determine conditions so that resin physical properties suitable for application are obtained. In addition, the resin additive composition of the present invention may be used alone or as a mixture with another additive in granule form.

The weight ratio of the resin additive composition of the present invention to a resin is 0.001 to 10 parts by weight and preferably 0.01 to 5 parts by weight to 100 parts by weight of the resin.

When the resin additive composition according to the present invention is used for stabilizing a resin, various compounding ingredients generally used for each resin are used according to need.

These compounding ingredients may be the same as or different from the resin additive (A) used for the resin additive composition of the present invention.

Examples of the compounding ingredients include phenol-based antioxidants, sulfur-based antioxidants, phosphorus-based antioxidants, ultraviolet absorbers, hindered amine compounds, nucleating agents, flame retardants, flame retardant assistants, lubricants, fillers, fibrous fillers, metallic soap, hydrotalcites, antistatic agents, pigments, and

dyes.

Examples of the phenol-based antioxidant include 2,6-di-tert-butyl-p-cresol, 2,6-diphenyl-4-octadesiloxyphenol, distearyl (3,5-di-tert-butyl-4-hydroxybenzyl)phosphonate, 1,6-hexamethylenebis[(3,5-di-tert-butyl-4-hydroxylphenyl)propionic acid amide], 4,4'-thiobis(6-tert-butyl-m-cresol), 2,2'-methylenebis(4-methyl-6-tertbutylphenol), 2,2'-methylenebis(4-ethyl-6-tert-butylphenol), 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, 1,3,5-tris(2,6-dimethyl-3-hydroxy-4-tert-butylbenzyl)isocyanurate, 1,3,5-tris(3,5-di-tert-butyl-4-hydroxybenzyl)isocyanurate, 1,3,5-tris(3,5-di-tert-butyl-4-hydroxybenzyl)-2,4,6-trimethylbenzene, 2-tert-butyl-4-methyl-6-(2-acryloyloxy-3-tert-butyl-5-methylbenzyl)phenol, stearyl (3,5-di-tert-butyl-4-hydroxyphenyl)propionate, thiodiethylene glycol bis[(3,5-di-tert-butyl-4-hydroxyphenyl)propionate], 1,6-hexamethylenebis[(3,5-di-tert-butyl-4-hydroxyphenyl)propionate], bis[3,3-bis(4-hydroxy-3-tert-butylphenyl)butyric acid]glycol ester, bis[2-tert-butyl-4-methyl-6-(2-hydroxy-3-tert-butyl-5-methylbenzyl) phenyl]terephthalate, 1,3,5-tris[(3,5-di-tert-butyl-4-hydroxyphenyl)propionyloxyethyl]isocyanurate, 3,9-bis[1,1-dimethyl-2-{(3-tert-butyl-4-hydroxy-5-methylphenyl)propionyloxy}ethyl]-2,4,8,10-tetraoxaspiro[5.5]undecane, and triethylene glycol bis[(3-tert-butyl-4-hydroxy-5-methylphenyl)propionate]. The phenol-based antioxidant is used in an amount of 0.001 to 10 parts by weight and more preferably 0.01 to 5 parts by weight to 100 parts by weight of a resin.

Examples of the sulfur-based antioxidant include dialkyl thiodipropionate such as dilauryl thiodipropionate, dimyristyl thiodipropionate, and distearyl thiodipropionate; and β-alkylmercaptopropionic acid ester of polyol such as pentaerythritol tetra(β-dodecylmercaptopropionate). The sulfur-based antioxidant is used in an amount of 0.001 to 10 parts by weight and more preferably 0.01 to 5 parts by weight to 100 parts by weight of a resin.

Examples of the phosphorus-based antioxidant include trisnonyl phenyl phosphite, tris[2-tert-butyl-4-(3-tert-butyl-4-hydroxy-5-methylphenylthio)-5-methylphenyl]phosphite, tridecyl phosphite, octyldiphenyl phosphite, di(decyl) monophenyl phosphite, di(tridecyl)pentaerythritol diphosphite, di(nonylphenyl)pentaerythritol diphosphite, bis(2,4-di-tert-butylphenyl)pentaerythritol diphosphite, bis(2,6-di-tert-butyl-4-methylphenyl)pentaerythritol diphosphite, bis(2,4,6-tri-tert-butylphenyl)pentaerythritol diphosphite, bis(2,4-dicumylphenyl)pentaerythritol diphosphite, tetra(tridecyl)isopropylidenediphenol diphosphite, tetra(tridecyl)-4,4'-n-butylidenebis(2-tert-butyl-5-methylphenol) diphosphite, hexa(tridecyl)-1,1,3-tris(2-methyl-4-hydroxy-5-tert-butylphenyl)butane triphosphite, tetrkis(2,4-di-tert-butylphenyl)biphenylene diphosphonite, 9,10-dihydro-9-oxa-10-phosphaphenanthrene-10-oxide, 2,2'-methylenebis(4,6-tert-butylphenyl)-2-ethylhexyl phosphite, 2,2'-methylenebis(4,6-tert-butylphenyl)-octadecyl phosphite, 2,2'-ethylidenebis(4,6-di-tert-butylphenyl) fluorophosphite, tris(2-[(2,4,8,10-tetrakis-tert-butyldibenzo[d,f][1,3,2]dioxaphosphepin-6-yl)oxy]ethyl)amine, and phosphites of 2-ethyl-2-butylpropylene glycol and 2,4,6-tri-tert-butylphenol. The phosphorus-based antioxidant is used in an amount of 0.001 to 10 parts by weight and more preferably 0.01 to 5 parts by weight to 100 parts by weight of a resin.

Examples of the ultraviolet absorber include 2-hydroxybenzophenone such as 2,4-dihydroxybenzophenone, 2-hydroxy-4-methoxybenzophenone, 2-hydroxy-4-octoxybenzophenone, and 5,5'-methylenebis(2-hydroxy-4-methoxybenzophenone); 2-(2'-hydroxyphenyl)benzotriazole such as 2-(2'-hydroxy-5'-methylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole, and 2-(2'-hydroxy-3'-tert-butyl-5'-carboxyphenyl)benzotriazole; benzoate such as phenyl salicylate, resorcinol monobenzoate, 2,4-di-tert-butylphenyl-3,5-di-tert-butyl-4-hydroxybenzoate, 2,4-di-tert-amylphenyl-3,5-di-tert-butyl-4-hydroxybenzoate, and hexadecyl-3,5-di-tert-butyl-4-hydroxybenzoate; substituted oxanilide such as 2-ethyl-2'-ethoxyoxanilide and 2-ethoxy-4'-dodecyloxanilide; cyanoacrylate such as ethyl-α-cyano-β,β-diphenylacrylate and methyl-2-cyano-3-methyl-3-(p-methoxyphenyl)acrylate; and triaryl triazine such as 2-(2-hydroxy-4-octoxyphenyl)-4,6-bis(2,4-di-tert-butylphenyl)-s-triazine, 2-(2-hydroxy-4-methoxyphenyl)-4,6-diphenyl-s-triazine, and 2-(2-hydroxy-4-propoxy-5-methylphenyl)-4,6-bis (2,4-di-tert-butylphenyl)-s-triazine. The ultraviolet absorber is used in an amount of 0.001 to 10 parts by weight and more preferably 0.01 to 5 parts by weight to 100 parts by weight of a resin.

Examples of the hindered amine compound include 2,2,6,6-tetramethyl-4-piperidyl stearate, 1,2,2,6,6-pentamethyl-4-piperidyl stearate, 2,2,6,6-tetramethyl-4-piperidyl benzoate, bis(2,2,6,6-tetramethyl-4-piperidyl) sebacate, bis (1,2,2,6,6-pentamethyl-4-piperidyl)sebacate, tetrakis(2,2,6,6-tetramethyl-4-piperidyl butanetetracarboxylate, tetrakis (1,2,2,6,6-pentamethyl-4-piperidyl butanetetracarboxylate, bis(2,2,6,6-tetramethyl-4-piperidyl) di(tridecyl)-1,2,3,4-butanetetracarboxylate, bis(1,2,2,6,6-pentamethyl-4-piperidyl)·di(tridecyl)-1,2,3,4-butanetetracarboxylate, bis(1,2,2,6,6-pentamethyl-4-piperidyl)-2-butyl-2-(3,5-di-tert-butyl-4-hydroxybenzyl)malonate, polycondensation products of 1-(2-hydroxyethyl)-2,2,6,6-tetramethyl-4-piperidinol and diethyl succinate, polycondensation products of 1,6-bis(2,2,6,6-tetramethyl-4-piperidylamino)hexane and dibromoethane, polycondensation products of 1,6-bis(2,2,6,6-tetramethyl-4-piperidylamino)hexane and 2,4-dichloro-6-morpholino-s-triazine, polycondensation products of 1,6-bis(2,2,6,6-tetramethyl-4-piperidylamino)hexane and 2,4-dichloro-6-tert-octylamino-s-triazine, 1,5,8,12-tetrakis[2,4-bis(N-butyl-N-(2,2,6,6-tetramethyl-4-piperidyl)amino)-s-triazine-6-yl]-1,5,8,12-tetraazadodecane, 1,5,8,12-tetrakis[2,4-bis(N-butyl-N-(1,2,2,6,6-pentamethyl-4-piperidyl)amino)-s-triazine-6-yl]-1,5,8,12-tetraazadodecane, 1,6,11-tris[2,4-bis(N-butyl-N-(2,2,6,6-tetramethyl-4-piperidyl)amino)-s-triazine-6-yl aminoundecane, and 1,6,11-tris[2,4-bis(N-butyl-N-(1,2,2,6,6-pentamethyl-4-piperidyl)amino)-s-triazine-6-yl aminoundecane.

Examples of the crystal neucleation agent include metal salts of aromatic carboxylic acids such as aluminium p-t-butylbenzoate and sodium benzoate; metal salts of acid phosphate esters such as sodium bis(2,4-di-tert-butylphenyl) phosphate, lithium bis(2,4-di-tert-butylphenyl)phosphate, and sodium-2,2'-methylene bis(4,6-di-tert-butylphenyl)phosphate; and polyol derivatives such as dibenzylidene sorbitol and bis(methylbenzylidene)sorbitol.

Examples of the flame retardant include halogen-based flame retardants; phosphorus-based flame retardants such as red phosphorus, melamine phosphate, guanidine phosphate, phosphoric acid ester compounds, and phosphazene compounds; nitrogen-based flame retardants such as melamine cyanurate; and metal hydroxide such as magnesium hydroxide and aluminium hydroxide. Examples of the flame retardant assistant include inorganic compounds such as antimony trioxide and zinc borate; and drip inhibitors such as polytetrafluoroethylene.

The hydrotalcite may be a natural or synthetic product and can be used regardless of the presence or absence of surface treatment and regardless of the presence or absence of crystal water. Examples of the hydrotalcite include basic carbonates represented by the following General Formula (II):

$$M_xMg_yAl_zCO_3\,(OH)_{xp+2y+3z-2}\cdot nH_2O \qquad \text{(II)}$$

(wherein M represents an alkali metal or zinc, X represents a number of 0 to 6, y represents a number of 0 to 6, z represents a number of 0.1 to 4, p represents the valence of M, and n represents a number of crystal water ranging from 0 to 100).

Examples of the lubricant include fatty acid amides such as lauryl amide, myristyl amide, stearyl amide, and behenyl amide; metallic soap such as ethylene bis-stearyl amide, polyethylene wax, calcium stearate, and magnesium stearate; and metal salts of phosphate esters such as magnesium distearyl phosphate and magnesium stearyl phosphate.

When the filler of an inorganic material, such as talc, silica, calcium carbonate, glass fiber, potassium titanate, or potassium borate, is in spherical form, the particle diameter is optionally determined, and in fibrous form, the fiber diameter, fiber length, and aspect ratio are optionally determined. It is preferable that the surface of the filler be treated, according to need.

In application to agricultural films, an ultraviolet absorber may be blended to control the growth of crops, and an infrared absorber may be blended to improve moisturizing effect. Furthermore, an anti-tarnish agent or an anti-fog agent may be blended for preventing occurrence of fog in a greenhouse or formation of condensation on a film surface, which cause insufficient supply of light to crops.

Examples

The present invention will now be described in detail with reference to Examples, but is not limited to the following Examples.

Example 1

As shown in Tables 1 and 2, a liquid resin additive was added to 100 g of an inorganic material powder at three weight ratios of 30/70, 50/50, and 70/30. The mixtures were stirred with an FM mixer (Model FM-20, product of Mitsui Mining Co., Ltd.) for 20 minutes to give additive compositions. The resin additive having a low melting point was heated to 80°C and maintained at the temperature for 30 minutes. The resulting resin additive in melted form was added to the inorganic material powder under atmospheric pressure.

Each of the obtained additive compositions was stirred with a glass rod and visually evaluated for properties. The evaluation results were expressed as follows:

◎ : in the form of a loose powder
○: in the form of a damp powder
× : in bunched form (low tackiness)
×× : in adhesive paste form

The additive compositions in powder form are excellent in handleability, but those in bunched or adhesive paste form are poor in handleability. Furthermore, the additive compositions in bunched or adhesive paste form are poor in dispersibility in a resin.

Table 1

| | | Example | | | | | | | |
|---|---|---|---|---|---|---|---|---|---|
| | | 1-1 | 1-2 | 1-3 | 1-4 | 1-5 | 1-6 | 1-7 | 1-8 |
| Inorganic material (B) | | Neusilin*1 | Florite*2 | Mizukasil*3 | Kyoward 1*4 | Kyoward 2*5 | Neusilin*1 | Neusilin*1 | Neusilin*1 |
| Oil absorption of (B) (mL/100 g) | | 340 | 400 | 235 | 175 | 300 | 340 | 340 | 340 |
| Additive (A) | | AD-1*6 | AD-1*6 | AD-1*6 | AD-1*6 | AD-1*6 | AD-2*7 | AD-3*8 | AD-4*9 |
| Impregnation ratio in weight of (A)/(B) | Impregnation ratio of 30/70 | ◎ 0.126 | ◎ 0.107 | ◎ 0.182 | ◎ 0.245 | ◎ 0.143 | ◎ 0.126 | ◎ 0.126 | ◎ 0.126 |
| | Impregnation ratio of 50/50 | ◎ 0.294 | ◎ 0.250 | ◎ 0.426 | ○ 0.571 | ◎ 0.333 | ◎ 0.294 | ◎ 0.294 | ◎ 0.294 |
| | Impregnation ratio of 70/30 | ◎ 0.686 | ○ 0.583 | ○ 0.993 | ○ 1.333 | ○ 0.778 | ◎ 0.686 | ◎ 0.686 | ◎ 0.686 |

*1: Neusilin US2, magnesium aluminometasilicate, an oil absorption of 340 mL/100 g, product of Fuji Chemical Industry Co., Ltd.

*2: Florite RT, special calcium silicate, an oil absorption of 400 mL/100 g, product of Tokuyama Corp.

*3: Mizukasil P-526, precipitated silica, an oil absorption of 235 mL/100 g, product of Mizusawa Industrial Chemicals, Ltd.

*4: Kyoward 700, $Al_2O_3 \cdot 9SiO_2 \cdot xH_2O$, an oil absorption of 175 mL/100 g, product of Kyowa Chemical Industry Co., Ltd.

*5: Kyoward 2100, hydrotalcite, an oil absorption of 300 mL/100 g, product of Kyowa Chemical Industry Co., Ltd.

*6: mixture (liquid at room temperature) of compounds represented by the following structure of which n = 14 and n = 16 at 1:1 (molar ratio)

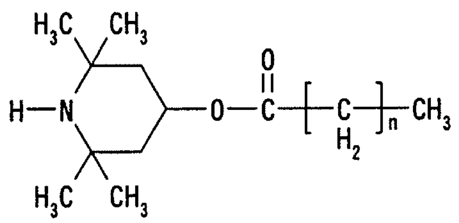

*7: mixture (melting point: 30°C) of AD-1/hexadecyl(3,5-di-tert-butyl-4-hydroxybenzoate) = 1/1 (molar ratio)

*8: 2-hydroxy-4-octyloxybenzophenone (melting point: 48°C)

*9: triphenyl phosphite (liquid)

Table 2

| | | Comparative Example | | |
|---|---|---|---|---|
| | | 1-1 | 1-2 | 1-3 |
| Inorganic material (B) | | Talc*10 | Cal-light*11 | Silica*12 |
| Oil absorption of (B) (mL/100 g) | | 53 | 140 | 130 |
| Additive (A) | | AD-1*6 | AD-1*6 | AD-1*6 |
| Impregnation ratio at a weight ratio of (A)/(B) | Impregnation ratio of 30/70 | ○ 0.808 | ○ 0.306 | ○ 0.330 |
| | Impregnation ratio of 50/50 | ×× 1.887 | × 0.714 | × 0.769 |
| | Impregnation ratio of 70/30 | ×× 4.403 | ×× 1.667 | ×× 1.795 |

*10: P-4, talc, an oil absorption of 53 mL/100 g, product of Nippon Talc Co., Ltd.

*11: Cal-light-KT (porous calcium carbonate), an oil absorption of 140 mL/100 g, product of Shiraishi Central Laboratories.

*12: Godball E16-C, silica, an oil absorption of 130 mL/100 g, product of Suzuki Yushi Co., Ltd.

On the basis of the results of Example 1-4 and Comparative Example 1-2, a powder with favorable handleability can be provided by using an inorganic compound having an oil absorption of 150 mL/100 g or more, even if the inorganic compound is impregnated with a liquid resin additive having a low melting point in a high concentration.

Reference Example 1 (stabilization of polypropylene)

To 100 parts by weight of a polypropylene resin (MFR: 25 g/10 min, density: 0.9 g/cm$^3$, flexural modulus: 950 MPa), 0.1 parts by weight of calcium stearate, 0.1 parts by weight of tetrakis(3-(3,5-di-tert-butyl-4-hydroxyphenyl)propionyloxymethyl)methane, 0.05 parts by weight of tris(2,4-di-tert-butylphenyl)phosphite, 0.1 parts by weight of hexadecyl-3,5-di-tert-butyl-4-hydroxybenzoate, and a hindered amine compound shown in Table 3 were added. The mixture was formed into a pellet with an extruder at 250°C and then injection-molded into test pieces of 60 mm × 20 mm × 1 mm at 250°C.

The obtained test pieces were evaluated for weatherability by the time until the occurrence of cracking under conditions at 83°C with rain (sprinkling ion-exchange water for 6 hours/day) by Sunshine Weather-O-Meter. Table 3 shows the results.

Table 3

| | Hindered amine compound | Blending amount | Weatherability (hour) |
|---|---|---|---|
| Reference Example 1-1 | AD-1/Neusilin (50%)*13 | 0.4 | 1000 |
| Reference Example 1-2 | AD-1*1 | 0.2 | 1000 |

*13: resin additive composition according to the present invention, which was prepared in Example 1-1 by impregnating at a ratio of AD-1 (resin additive (A))/Neusilin (inorganic material (B)) = 50%/50% by weight

As in Reference Example 1-1, the additive impregnated to an inorganic material according to the present invention exhibits stabilizing effect equivalent to that of non-impregnated additive as in Reference Example 1-2. Thus, the handleability is improved by impregnating an additive to an inorganic material, without affecting the stabilizing effect of the additive.

Reference Example 2

To 100 parts by weight of a polypropylene resin (MFR: 25 g/10 min, density: 0.9 g/cm$^3$, flexural modulus: 950 MPa), 0.1 parts by weight of calcium stearate, 0.1 parts by weight of tetrakis(3-(3,5-di-tert-butyl-4-hydroxyphenyl)propionyloxymethyl)methane, 0.1 parts by weight of tris(2,4-di-tert-butylphenyl)phosphite, and a hindered amine compound shown in Table 4 were added. The mixture was formed into a pellet with an extruder at 250°C. Ten grams of the obtained pellet was measured for haze (%) based on the haze of a glass plate on a fogging tester after 20 hours at 100°C using a window screen fogging tester, model WF-1 manufactured by Suga Test Instruments Co., Ltd.

Table 4 shows the results.

Table 4

| | Hindered amine compound | Blending amount | Haze |
|---|---|---|---|
| Reference Example 2-1 | AD-1/Neusilin (50%)*13 | 0.4 | 1.0 |
| Reference Example 2-2 | AD-1*1 | 0.2 | 2.5 |

**Claims**

1. A resin additive composition comprising a powdery inorganic material (B) having an oil absorption of 150 mL/100 g or more impregnated with a resin additive (A) having a melting point of 100˚C or less in advance.

2. The resin additive composition according to Claim 1, wherein the resin additive (A) has a melting point of 60˚C or less.

3. The resin additive composition according to Claim 1 or 2, wherein the resin additive (A) is an ultraviolet absorber, a hindered amine compound, or a mixture thereof.

4. The resin additive composition according to any one of Claims 1 to 3, wherein the resin additive (A) is a compound represented by General Formula (I):

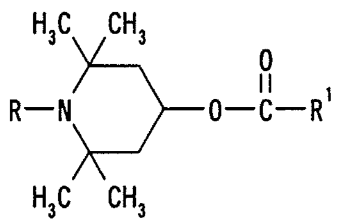

(I)

(wherein R represents a hydrogen atom, a hydroxyl group, an alkyl group, a hydroxyalkyl group, an alkoxy group, a hydroxyalkoxy group, which have 1 to 30 carbon atoms, or an oxyradical; and $R^1$ represents an alkyl group having 1 to 30 carbon atoms or an alkenyl group having 2 to 30 carbon atoms).

5. The resin additive composition according to Claim 4, wherein $R^1$ represents a mixture of alkyl groups having 8 to 22 carbon atoms.

6. The resin additive composition according to any one of Claims 1 to 5, wherein the inorganic material (B) is magnesium aluminometasilicate.

7. A resin composition containing a resin additive composition according to any one of Claims 1 to 6.

**INTERNATIONAL SEARCH REPORT**

International application No.
PCT/JP2006/311249

A. CLASSIFICATION OF SUBJECT MATTER
*C08L101/00*(2006.01)i, *C08K3/34*(2006.01)i, *C08K5/3435*(2006.01)i, *C08K9/04*(2006.01)i

According to International Patent Classification (IPC) or to both national classification and IPC

B. FIELDS SEARCHED

Minimum documentation searched (classification system followed by classification symbols)
C08L1/00-101/16, C08K3/00-13/08

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y | JP 2000-136265 A (Nippon Silica Kogyo Kabushiki Kaisha),<br>16 May, 2000 (16.05.00),<br>Claims; Par. No. [0009]; examples<br>(Family: none) | 1,2,7<br>3-6 |
| X<br>Y | JP 3-100058 A (Canon Inc.),<br>25 April, 1991 (25.04.91),<br>Claims; examples<br>(Family: none) | 1,2,7<br>3-6 |
| X<br>Y | JP 2-107692 A (Canon Inc.),<br>19 April, 1990 (19.04.90),<br>Claims; examples<br>& EP 322099 A1 & US 4970559 A<br>& US 5102741 A | 1,2,7<br>3-6 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>23 August, 2006 (23.08.06) | Date of mailing of the international search report<br>05 September, 2006 (05.09.06) |
| Name and mailing address of the ISA/<br>Japanese Patent Office<br>Facsimile No. | Authorized officer<br><br>Telephone No. |

Form PCT/ISA/210 (second sheet) (April 2005)

**INTERNATIONAL SEARCH REPORT**

International application No.
PCT/JP2006/311249

C (Continuation). DOCUMENTS CONSIDERED TO BE RELEVANT

| Category* | Citation of document, with indication, where appropriate, of the relevant passages | Relevant to claim No. |
|---|---|---|
| X<br>Y | JP 61-57634 A (Sumitomo Chemical Co., Ltd.),<br>24 March, 1986 (24.03.86),<br>Claims; example 10<br>(Family: none) | 1,2,7<br>3-6 |
| Y | JP 11-255957 A (Ciba Specialty Chemicals Holding Inc.),<br>21 September, 1999 (21.09.99),<br>Claims; Par. Nos. [0062], [0073]; examples<br>& US 2002/0013390 A1 & US 2003/0013784 A1<br>& US 2005/0006628 A1 & GB 2332678 A<br>& DE 19859096 A1 & FR 2772773 A<br>& BE 1012882 A & NL 1010890 A1<br>& ES 2155364 A1 & IT 1304793 B1<br>& CA 2256800 A1 | 1-7 |
| Y | JP 8-333522 A (CIBA-Geigy AG.),<br>17 December, 1996 (17.12.96),<br>Full text<br>& EP 745646 A1 & DE 59607295 D<br>& AU 5451496 A & BR 9602573 A<br>& CA 2177654 A1 & ZA 9604416 A<br>& AT 203256 T & TW 416970 B<br>& ES 2160793 T | 1-7 |
| Y | JP 60-184558 A (Kiribai Kagaku Kogyo Kabushiki Kaisha),<br>20 September, 1985 (20.09.85),<br>Claims<br>(Family: none) | 6 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2003041008 A
- JP 10512320 W
- JP 9087290 A